Europäisches Patentamt

European Patent Office

Office européen des brevets

(19)

(11) **EP 1 411 326 A1**

(12) **EUROPEAN PATENT APPLICATION**
published in accordance with Art. 158(3) EPC

(43) Date of publication:
**21.04.2004 Bulletin 2004/17**

(51) Int Cl.[7]: **G01D 9/00**, G01D 21/00,
G01D 1/18, G05B 23/02

(21) Application number: **02738648.1**

(22) Date of filing: **10.06.2002**

(86) International application number:
**PCT/JP2002/005760**

(87) International publication number:
**WO 2002/103297 (27.12.2002 Gazette 2002/52)**

(84) Designated Contracting States:
**AT BE CH CY DE DK ES FI FR GB GR IE IT LI LU MC NL PT SE TR**

(30) Priority: **14.06.2001 JP 2001180702**

(71) Applicant: **Jinyama, Ho
Fukuoka-shi, Fukuoka 813-0043 (JP)**

(72) Inventor: **Jinyama, Ho
Fukuoka-shi, Fukuoka 813-0043 (JP)**

(74) Representative: **Altenburg, Udo, Dipl.-Phys.
Patent- und Rechtsanwälte
Bardehle . Pagenberg . Dost .
Altenburg . Geissler
Postfach 86 06 20
81633 München (DE)**

(54) **SIGNAL RECORDER WITH STATUS RECOGNIZING FUNCTION**

(57) This invention proposes a signal recording system and signal recording device, which will not only reduce the waste in signal recording media, but also records the symptom parameters and original signals reflecting the state changes of objects at appropriate time and has state judgment function when performing condition monitoring and signal recording.

In this signal recording system and signal recording device, for the signal measured by sensors, first the symptom parameters in the high, medium and low frequency domains are calculated, and then, according to the degree of state change, it will determine whether the symptom parameters will be recorded solely, or the symptom parameters and the original signals for the required time period will be recorded concurrently. In determining the state, the recorded symptom parameters are converted into normal symptom parameters conforming to normal probability density distribution, the state judgment criterions for dimensional and non-dimensional symptom parameters are determined by probability and possibility theory, and then the state judgment is performed by integrating the judgment results of dimensional and non-dimensional symptom parameters. Furthermore, as required, trend control, state prediction and state change cause analysis will be performed, to display the state at the time of measurement, and give off an alarm in the dangerous state.

Fig. 12

## Description

### I. Technical area

This invention is about the condition monitoring method and signal recording device, which is very suitable in for example machinery diagnosis, medical diagnosis and earthquake monitoring, in long-time signal recording to monitor the state of objects, when it is judged that there is no abnormality or state change, it only records the symptom parameters reflecting their state, and when it is judged that abnormality or state change has taken place, it will record simultaneously the symptom parameters and original signals, and also perform condition monitoring, trend control of state change, state prediction and investigation of the causes of state change.

### II. Previous technology

Main signal recording methods previously used:

    1) Direct and continuous recording of original signals.

    2) Recording at pre-set time intervals.

    3) Signal recording is determined by a trigger as the signal peak value and input level.

However, when signals are recorded for condition monitoring, the usual practice is that signals reflecting the state changes of the objects to be monitored should be recorded as much as possible. For instance, to record the signals of machinery states, especially the recording of original signals in time serial for long time requires large capacity of recording media, therefore with the present technology of recording media, it is difficult to perform long-time recording. If the machine is in normal state, or there is no state change, the state signal can be recorded one time by only recording the symptom parameters reflecting the state trend. If original signals of the identical state are recorded beyond the need, it would result in waste of recording media, and the time that can be used to record signals would also be shortened.

Furthermore, in case of a state change, it is necessary that the signals recording of the state change should not be missed for the purpose to make cause analysis and to find out the cause. To achieve this, it is quite difficult to develop a signal recording device that will not waste the recording media while able to record the symptom parameters reflecting the state and the original signals at appropriate time.

Direct recording of original signals of objects is difficult not only for long-time recording, but also difficult to catch the state change.

In case of recording at preset time intervals, state change may not necessarily take place during signal recording periods, while state change is possible when no recording is performed. In other words, it cannot be ensured that the desired signals are recorded and it also cannot avoid recording of useless signals.

When the peak value and signal level exceeds the preset threshold, it would be very difficult to determine the threshold value. That is, the peak value of signals and signal level may not necessarily reflect the state change.

As in most cases, it is not known which probability density distribution the symptom parameters for condition monitoring follow, so it is assumed that their symptom parameters follow the normal probability density distribution, and it cannot ensure the accuracy of the judgment result when condition monitoring is performed according to statistic theory.

### III. Subject to be solved

In this invention, to solve the above question points, for the signals measured by sensors, firstly the symptom parameters in the high, medium and low frequency domains are calculated, and the symptom parameters are converted into "normal symptom parameters" conforming to the normal probability density distribution. Secondly criterions of the normal symptom parameters for the state judgment are determined by probability theory and possibility theory. Thirdly condition monitoring is performed by integrating the judgment results of state change using dimensional and non-dimensional symptom parameters, to determine whether only the symptom parameters will be recorded, or the symptom parameters and the original signals for the required time period will be recorded concurrently according to the degree of state change. When only symptom parameters are recorded, the required capacity of recording media will be far less than that required for continuous recording of original signals, therefore long-time recording and condition monitoring can be performed.

Furthermore, the recorded original signals, symptom parameters or normal symptom parameters can be used to perform trend control of state change, state prediction and causes analysis of state change. In addition, the state can be displayed as required, and alarms can be given in dangerous state.

**IV. Detail method of the implementation**

**1. Symptom parameters for use in condition monitoring**

Symptom parameters that can be used in signal recording devices include symptom parameters of time domain, parameters of frequency domain ((1) Peng CHEN, Masami NASU, Toshio TOYOTA: Self-reorganization of symptom parameters in frequency domain for failure diagnosis by genetic algorithms, Journal of Intelligent & Fuzzy System, IOS Press, Vol.6 No1. 1, pp. 27-37, 1998.) and symptom parameters of time - frequency domains (2) Peng CHEN, Toshio TOYOTA, Masatoshi TANIGUTI, Feng FANG and Tomoya NIHO: Failure Diagnosis Method for Machinery in Unsteady Operating Condition by Instantaneous Power Spectrum and Genetic Algorithms, Proc. of Fourth International Conference on Knowledge-Based Intelligent Engineering System & Allied Technologies (KES2000). Here, the symptom parameters of time domain will be shown as example.

**1) Non-dimensional symptom parameters**

From the measured time serial signals, signals of low, medium and high frequency domains are extracted using a filter. The extracted signals x(t) are normalized using the following formula.

$$x_i = \frac{x'_i - \bar{x}}{S} \tag{0}$$

where $x'_i$ is the discrete values of x(t) after A/D conversion, $\bar{x}$ and S are respectively the average value and standard deviation of $x'_i$.

The symptom parameters previously used are expressed in (1) ∼ (10) ((3) Peng CHEN, Toshio TOYOTA, Yueton LIN, Feiyue WANG: FAILURE DIAGNOSIS OF MACHINERY BY SELF- REORGANIZATION OF SYMPTOM PARAMETERS IN TIME DOMAIN USING GENETIC ALGORITHMS, International Journal of Intelligent Control and System, Vol.3, No.4, pp.571-585, 1999.).

$$p_1 = \sigma/\bar{x}_{abs} \quad ;\text{(rate of variation)} \tag{1}$$

where

$$\bar{x}_{abs} = \sum_{i=1}^{N} |x_i|/N \quad ;\text{(absolute mean value, N being the total number of data)}$$

$$\sigma = \sqrt{\frac{\sum_{i=1}^{N} (x_i - \bar{x})^2}{N-1}} \quad ;\text{(standard deviation)}$$

$$p_2 = \frac{\sum_{i=1}^{N} (x_i - \bar{x})^3}{(N-1)\sigma^3} \quad ;\text{(distortion)} \tag{2}$$

$$p_3 = \frac{\sum_{i=1}^{N}(x_i - \bar{x})^4}{(N-1)\sigma^4} \quad ;(\text{steepness}) \tag{3}$$

$$p_4 = \bar{x}_p / \bar{x}_{abs} \tag{4}$$

where, $\bar{x}_p$ is the mean value of extreme large values (peak values) of waveforms.

$$p_5 = |\overline{x_{max}}| / \bar{x}_p \tag{5}$$

where, $|x_{max}|$ is the mean value of maximum values of 10 waveforms.

$$p_6 = \bar{x}_p / \sigma_p \tag{6}$$

where, $\sigma_p$ is the standard deviation of extreme large values

$$p_7 = \bar{x}_L / \sigma_L \tag{7}$$

where, $\bar{x}_L$ and $\sigma_L$ are respectively the mean values and standard deviation of extreme small values (valley values).

$$p_8 = \frac{\sum_{i=1}^{N}\sqrt{|x_i|}}{N\sqrt{\sigma}} \tag{8}$$

$$p_9 = \frac{\sum_{i=1}^{N}x_i^2}{N\sigma^2} \tag{9}$$

$$p_{10} = \frac{\sum_{i=1}^{N}\log|x_i|}{N\log\sigma} ; \quad (x_i \neq 0) \tag{10}$$

Formulas (1) ~ (10) are previous symptom parameters, but to enable easy high speed calculation in numerical calculation, the "interval symptom parameters" have been newly proposed as shown in Formulas (11) ~ (16).

$$p_{k1} = \frac{\sum_{i=1}^{N_{k1}} x_i}{N_{k1}} \qquad (11)$$

$$\sigma_{k1} = \sqrt{\frac{\sum_{i=1}^{N_{k1}} (x_i - p_{k1})^2}{N_{k1}}} \qquad (12)$$

where, $x_i$, $\sigma$ knd k can be set arbitrarily, for example, k=0.5, 1 and 2.

$$p_{h1} = \frac{\sum_{i=1}^{N_{h1}} |x_i|}{N_{h1}} \qquad (13)$$

$$\sigma_{h1} = \sqrt{\frac{\sum_{i=1}^{N_{h1}} (|x_i| - p_{h1})^2}{N_{h1}}} \qquad (14)$$

where, $x_i$, $\sigma$ and h can be set arbitrarily, for example, k=0.5, 1 and 2.

$$p_{k2} = \frac{\sum_{i=1}^{N_{k1}} (x_i - p_{k1})^t}{\sigma_{k1}{}^t N_{k1}} \qquad (15)$$

where, $x_i > k\sigma$, k and $p_{k1}$ are the same as in formula (11). t can be set arbitrarily, for example, t=2, 3, 4.

$$p_{h2} = \frac{\sum_{i=1}^{N_{h1}} (|x_i| - p_{h1})^t}{\sigma_{h1}{}^t N_{h1}} \qquad (16)$$

where, $x_i < -h\sigma$, h and $p_{h1}$ are the same as in formula (13). t can be set arbitrarily, for example, t=2, 3, 4.

**2) Dimensional symptom parameters**

In calculation of dimensional symptom parameters, the measured signals have not been normalized according to formula (0)

$$p_{d1} = \frac{\sum_{i=1}^{N} |x_i|}{N-1} \qquad \text{(absolute mean value of signal)} \qquad (17)$$

$$p_{d2} = \frac{\sum_{i=1}^{N} x_i^2}{N-1} \qquad \text{(effective value of signal)} \qquad (18)$$

$$p_{d3} = \frac{\sum_{i=1}^{N_p} |x_i|_p}{N_p} \qquad \text{(peak mean value of absolute value of signal)} \qquad (19)$$

where, $|x_i|$ is the peak mean value of absolute value of signal (extreme large value), and $N_p$ the total number of peak values.

$$p_{d4} = \frac{\sum_{i=1}^{N_p} |x_i|_p^2}{N_p} \qquad \text{(peak effective value of absolute value of signal)} \qquad (20)$$

Also, many symptom parameters can be defined in addition to the above symptom parameters, but when this method is applied, the above-mentioned symptom parameters should be used first for trial, and if the effect of state identification is not good, other symptom parameters can be defined in addition.

**2. Converting symptom parameters into normal probability variables**

The recorded original symptom parameters are expressed as $p^*_i$. When $p^*_i$ is used to perform condition monitoring and state prediction according to statistic theory, it is necessary to know if $p^*_i$ follows the normal distribution and its probability density. However, as the objects of measurement cannot be specified in advance, in most cases, the probability distribution of $p^*_i$ is not known in advance.

Therefore in this invention, for the recorded symptom parameters $p^*_i$, the following method is used to convert $p^*_i$ into probability variables $p_i$ in normal distribution.

**(1) Method based on reference time**

The reference time of the measuring object, for instance, the time for the first measurement, is determined, and the probability density function f $(p^*_{io})$ and the accumulated probability distribution function F $(p^*_{io})$ of the symptom parameters $p^*_{io}$ at that time are obtained. Assuming the probability density distribution of a standard normal distribution is $\varphi(x_i)$, and the accumulated probability distribution function of standard normal distribution is $\varphi(x_i)$. Furthermore, the probability density function of discrete data $p^*_{io}$ can also be referred to as "frequency distribution function" and "histogram", but in the following, they are noted as "probability density distribution function".

**1) Method based on mean values and standard deviation converted by normal distribution**

The mean value $\mu_{io}$ converted by normal distribution can be obtained using the following formula.

$$\mu_{i0}=p^{*}_{i0}-\sigma_{i0}\times\Phi^{-1}(F(p^{*}_{i0}))\tag{21}$$

where, $\varphi^{-1}$ is the inverse function of $\varphi$, $\sigma_{io}$ the standard deviation after normal distribution conversion, and can be obtained using the following formula.

$$\sigma_{i0}=\frac{1}{f(p^{*}_{i0})}\Phi(\Phi^{-1}(F(p^{*}_{i0})))\tag{22}$$

By substituting symptom parameters $p^{*}_{ik}$ obtained with time other than reference time into formula (21), $\mu_{iok}$ can be obtained. $\mu_{iok}$ can be used for condition monitoring and state prediction.

**2) Direct variable conversion method**

Symptom parameters $p^{*}_{ik}$ obtained with time other than reference time are converted into probability variables in normal distribution using the following formula.

$$x_{ik}=\Phi^{-1}(Fp^{*}_{ik}))\tag{23}$$

$x_{ik}$ is used for condition monitoring and state prediction.

**(2) Method not based on reference time**

Obtain the probability density function $f_k(p^{*}_{ik})$ and accumulated probability distribution function $F_K(p^{*}_{ik})$ of symptom parameters $p^{*}_{ik}$ obtained from the above measured data at any time.

**1) Method to directly convert symptom parameters $p^{*}_{ik}$ into probability variables $\mu_{ik}$ in normal distribution**

The mean values $\mu_{ik}$ converted into normal distribution can be obtained using the following formula.

$$\mu_{ik}=p^{*}_{ik}-\sigma_{ik}\times\Phi^{-1}(F_k(p^{*}_{ik}))\tag{24}$$

where, $\sigma_{ik}$ can be obtained using the following formula.

$$\sigma_{ik}=\frac{1}{f_k(p^{*}_{ik})}\Phi(\Phi^{-1}(F_k(p^{*}_{ik})))\tag{25}$$

$\mu_{ik}$ is used for condition monitoring and state prediction.

**2) Method to indirectly convert probability density function of symptom parameters $p^{*}_{ik}$ into probability variables $\mu_{ikj}$ in normal distribution**

Let the minimum and maximum values of symptom parameters $p^{*}_{ik}$ be respectively $(p^{*}_{ik})_{min}$ and $(p^{*}_{ik})_{max}$. Let the values of N new variables $X^{*}_{ik}$ taken at equal intervals from $(p^{*}_{ik})_{min}$ to $(p^{*}_{ik})_{max}$ be $X^{*}_{ikj}$. Where j=1~N. When $X_{ik}$ are substituted into formula (24), N $\mu_{ikj}$ corresponding to variables $X^{*}_{ik}$ can be obtained.
$\mu_{ikj}$ can be obtained using the following formula.
The symptom parameters $P^{*}_i$ converted into normal probability variables $\mu_{iok}$, $X_{ik}$, $\mu_{ik}$ and $\mu_{ikj}$ in formulas (21), (23) and (24) are referred to as "normal symptom parameters", and are expressed as $P_i$.

**3. Method to judge state changes on the basis of statistic theory and possibility theory** Here, the method to judge the degree of state change on the basis of statistic theory and possibility theory using the normal symptom parameters $P_i$.

**(1) Make judgment on the basis of statistic theory**

**1) Checking the mean values of normal symptom parameters**

Let the values of normal symptom parameters $P_i$ obtained in state k and state y be respectively $P_{ik}$ and $P_{iy}$. Where, it is expressed that i=1~M (M being the total number of normal symptom parameters in use).
If the mean values of $P_{ik}$ and $P_{iy}$ are set respectively as $\overline{P_{ik}}$ and $\overline{P_{iy}}$, and the standard deviations of $P_{ik}$ and $P_{iy}$ set respectively as $S_i$ and $S_{iy}$, the mean values and standard deviation can be calculated using the following formula.

$$\bar{p} = \frac{\sum_{j=1}^{J} p_j}{J} \qquad (26)$$

$$S^2 = \frac{\sum_{j=1}^{J} (p_j - \bar{p})^2}{J-1} \qquad (27)$$

Whether $\bar{P}_{ik}$ and $\bar{P}_{iy}$ are equal can be checked as follows ((4) K. A. Brownlee. Statistical Theory and Methodology in Science and Engineering, Second Edition, The University Chicago, 1965).

$$|\bar{p}_{ik} - \bar{p}_{iy}| > \frac{S_{iy}}{\sqrt{J}} t_{\alpha/2}(J-1) \qquad (28)$$

If the above formula exists, effective level $\alpha$ is used to determine "$\bar{P}_{ik}$ and $\bar{P}_{iy}$ are not equal".
Where, $t_{\alpha/2}(J-1)$ is the percentage of the lower side probability of $\alpha/2$ with respect to the t distribution of probability density function for freedom J-1.

**2) Discrete check for normal symptom parameters**

Whether $S_{ik}$ and $S_{iy}$ are equal can be checked as follows ((5) K. A. Brownlee. Statistical Theory and Methodology in Science and Engineering, Second Edition, The University Chicago, 1965).

$$\frac{S_{ik}^2}{S_{iy}^2} > F_{\alpha/2}(J-1,J-1) \ or \ \frac{S_{iy}^2}{S_{ik}^2} > F_{\alpha/2}(J-1,J-1) \qquad (29)$$

If the above formula exists, effective level $\alpha$ is used to determine "$S_{ik}$ and $S_{iy}$ are not equal".
Where, $t_{\alpha/2}(J-1, J-1)$ is the percentage of the lower side probability of $\alpha/2$ with respect to the F distribution of probability density function for freedom J-1.
When the effective level $\alpha$ is changed, the degree of state change of state y with respect to state k can be determined by confirming if formula (28) or formula (29) is satisfied. An example to determine the degree of state change on the basis of effective level $\alpha$ is as shown in Table 1. Furthermore, in machinery diagnosis, assuming state k is the normal state, the judgment whether state y is in normal, caution or dangerous state can be made by setting as "normal" ($\alpha$1), "caution" ($\alpha$2) and "danger" ($\alpha$3) as shown in Table 1.

Table 1.

| Example to judge degree of state change according to effective level | | | |
|---|---|---|---|
| | No state change (normal) | Medium state change (caution) | Big state change (danger) |
| Effective level (example) | $\alpha1$ (0.4) | $\alpha2$ (0.10) | $\alpha3$ (0.005) |

Furthermore, the figures in Table 1 means that formula (28) or formula (29) exists only when $\alpha$ has become that value.

### 3) Judgment on the basis of confidence interval

Let the mean value of normal symptom parameters obtained from data measured at reference time be $P_{io}$, and the mean value of normal symptom parameters obtained from data measured at other time be $\overline{P_{ik}}$, the confidence interval of $\overline{P_{io}}$ can be given with the following formula.

$$\overline{p_{i0}} \pm t_{\sigma/2}(J\text{-}1)S_{i0}/\sqrt{J} \tag{30}$$

where, $t_{\alpha/2}(J\text{-}1)$ is the percentage of the lower side probability of $\alpha/2$ with respect to the t distribution of probability density function for freedom J-1. $S_{io}$ is the standard deviation of $\overline{P_{io}}$ obtained from data.

If $\overline{P_{ik}}$ is within the interval shown by formula (30), it can be said that there is no difference from $\overline{P_{io}}$ in the probability of $\alpha$.

When the confidence interval of $\overline{P_{io}}$ for 99% is 10<J<50, it can be expressed approximately as follows.

$$\overline{p_{i0}} \pm 3S_{i0}/\sqrt{J} \tag{31}$$

Therefore, if $\overline{P_{ik}}$ is beyond the scope of formula (31), it can be said that in a probability of 99%, it is different from $P_{io}$.

Moreover, the confidence interval of $\overline{P_{ik}}$ obtained using the measured data can be obtained using the following formula.

$$\overline{p_{ik}} \pm 3S_{ik}/\sqrt{J} \tag{32}$$

where, $S_{ik}$ is the standard deviation of $P_{ik}$ obtained from data.

If $\alpha$ of Table 1 is substituted into formula (30), the following confidence intervals can be obtained.

$$\overline{p_{i0}} \pm t_{0.2}(J\text{-}1)S_{i0}/\sqrt{J} \quad \text{(interval without state change) (normal)} \tag{33}$$

$$\overline{p_{i0}} \pm t_{0.05}(J\text{-}1)S_{i0}/\sqrt{J} \text{ (interval with medium state change (caution)} \tag{34}$$

$$\overline{p_{i0}} \pm t_{0.025}(J\text{-}1)S_{i0}/\sqrt{J} \text{ (interval with big state change) (danger)} \tag{35}$$

State change can be judged on the basis whether $P_{ik}$ is within these intervals.

### (2) Judgment based on possibility theory

### 1) Preparation of possibility distribution function

After the values of normal symptom parameters $P_i$ are calculated using the measured signals in state k, the possibility distribution function $P_k(P_i)$ is obtained from probability density function $f_k(P_i)$ using formula (36).

According to possibility theory ((6) L. Davis: HANDBOOD OF GENETIC ALGORITHMS, Van Nostrand Reinhold, A Division of Wadsworth, Inc (1990)), the possibility distribution function of $P_i$ can be obtained no matter which probability distribution if follows. For instance, when $P_i$ is in normal distribution, the possibility distribution function of segment N $P_k$ ($P_i$) can be obtained as follows.

$$P_k(p_{ix}) = \sum_{y=1}^{Y} \min\{\lambda_x, \lambda_y\} \tag{36}$$

where,

$$\lambda_x = \int_{p_{ix-1}}^{p_{ix}} \frac{1}{S_i\sqrt{2\pi}} exp\left\{-\frac{(p-\overline{p_i})^2}{2S_i^2}\right\} dp$$

$$\lambda_y = \int_{p_{iy-1}}^{p_{iy}} \frac{1}{S_i\sqrt{2\pi}} exp\left\{-\frac{(p-\overline{p_i})^2}{2S_i^2}\right\} dp$$

in the above formula, $\overline{P_{ix}}$ = min { $P_i$ }+x $\times$ (max { $P_i$ })/N, x = 1$\sim$N, $S_i$ is the standard deviation of $P_i$, and $P_i$ is the mean value of $P_i$.

### 2) Method to obtain possibility

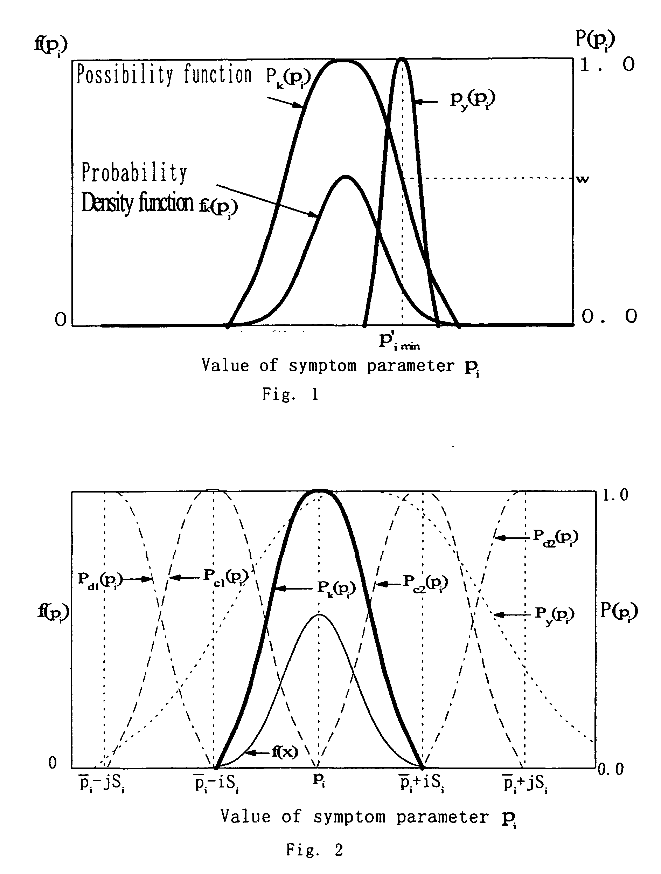

As shown in Fig. 1, let the possibility distribution functions of normal symptom parameters $P_i$ obtained in state k and state y be $P_k(P_i)$ and $P_y(P_i)$, when the values of normal symptom parameters obtained in state y are set as $P_i$, the possibility w that "state y is identical to state k" can be obtained as shown below.

    a) w is determined according to the matching of the mean value $P_{i\,mean}$ of $P_i$ with $P_k(P_i)$,

    b) w is determined according to the matching of $P_y(P_i)$ with $P_k(P_i)$.
       Furthermore, the formula to obtained w according to the matching of $P_y(P_i)$ with $P_k(P_i)$ is as shown below.

$$w = \sum_{x=-\infty}^{+\infty} P_k(p_{ix}) \cdot P_y(p_{ix}) \tag{37}$$

### 3) Judgment of state change

After obtaining the possibility distribution function $P_k(P_i)$ of the normal symptom parameters $P_i$ from state k, the possibility distribution function for "state change is small" ($P_{c1}(P_i)$ and $P_{c2}(P_i)$) and the possibility distribution function for "state change is big" ($P_{d1}(P_i)$ and $P_{d2}(P_i)$) on both left and right sides shall be determined as shown in Fig. 2.
The i, j for boundary values

$$\overline{p_i}\pm iS_i, \; \overline{p_i}\pm jS_i$$

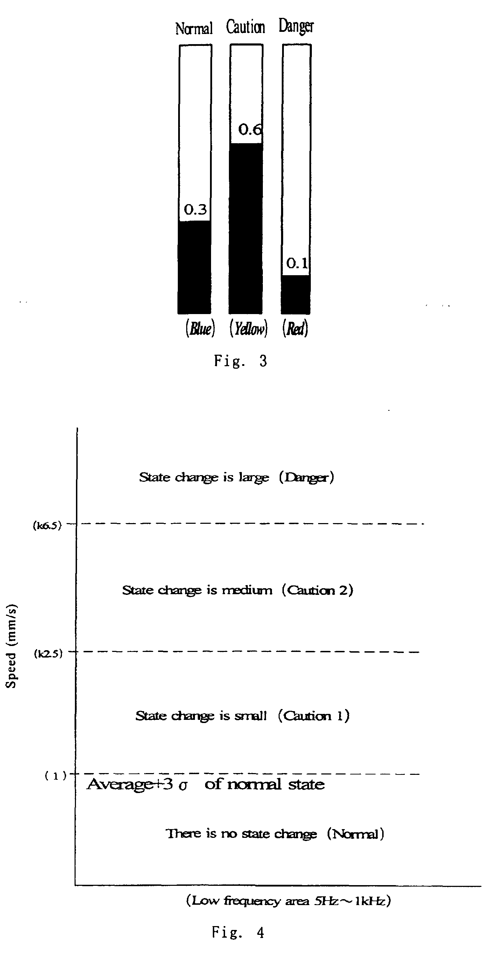

Should be determined according to user input, but as standard values, I = 3 and j = 6.
In equipment diagnosis, the possibility distribution function for normal state should be set as $P_k(P_i)$, the possibility distribution function for caution state set as $P_{c1}(P_i)$ and $P_{c2}(P_i)$, and the possibility distribution function for dangerous state set as $P_{d1}(P_i)$ and $P_{d2}(P_i)$. The possibility of "normal", "caution" and "danger" obtained in actual identification is as shown in Fig. 3. Moreover, an alarm can be sent when it is judged as "dangerous".

**(3) Condition monitoring method by integrating symptom parameters into one**

It is also possible to judge the state by integrating symptom parameters into one symptom parameter. As the integrating means, there are for instance the condition monitoring method on the basis of genetic algorithms ((8) International Patent Application: No.PCT/JP00/03006, Application No.: 2000 - 618695), the neural network and main composition analysis method ((9) Otsu, Kurita and Sekida: Graphic Identification, Asakura Bookstore (1996)), (10) Gan Li: Numerical Theory for Neural Network, Industrial Press (1978), (9) K. Fukunaga: Introduction to Statistical Pattern Recognition, Academic Press (1972), and (11) Toshio TOYOTA: Research Report on Practical Application of Latest Equipment Diagnosis Technology, Legal Corporate Japan Plant Maintenance Association, (1999), etc.

**(4) Judging the state change by integrating the judgment criterion for dimensional symptom parameters and non-dimensional symptom parameters**

Dimensional symptom parameters represent the magnitude of signal waveform. Non-dimensional symptom parameters represent the shape characteristics of signal waveform. For instance, in equipment diagnosis, even in the normal state, with the change in speed and load, there will be change in dimensional symptom parameters. It would be more effective for judgment of state change by integrating the dimensional symptom parameters and non-dimensional symptom parameters.

**1) Judgment criterion for dimensional symptom parameters**

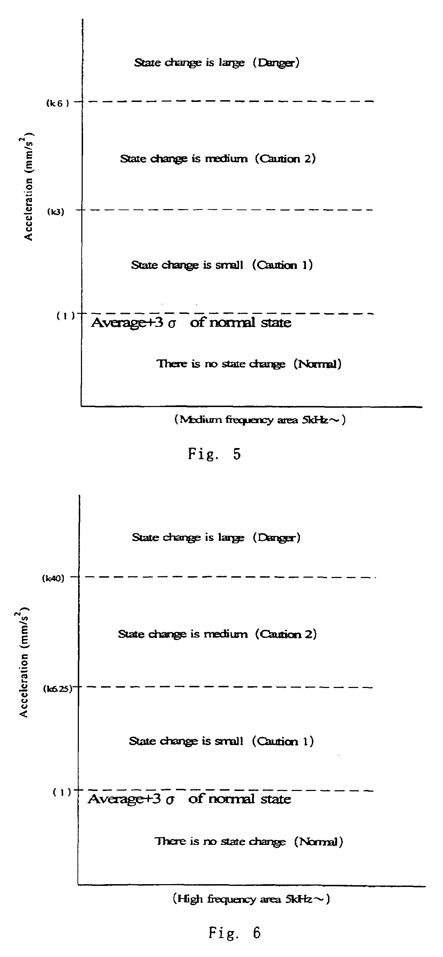

In the diagnosis of rotating machinery, the judgment criterion for non-dimensional symptom parameters in the low, medium and high frequency domains are as shown in Figs. 4, 5 and 6.
In the figure, k is a default value and is set as 1, but it should be made adjustable. For example, when it is desired to increase the sensitivity with steps of 0.2, k should be lowered by 0.2 each time, and on the contrary, when the sensitivity is to be lowered, k should be increased by 0.2 each time.
Also, the measured signals in the low frequency domain are vibration speed, while those in the medium and high frequency domains are acceleration. Furthermore, Figs. 4, 5 and 6 show the judgment criterion for rotating mechanical equipment, but the judgment criterion for other measuring objects should be pre-set as shown in Figs. 4, 5 and 6.

**2) Judgment criterion for non-dimensional symptom parameters**

In equipment diagnosis, as shown in Table 1, the judgment criterion for non-dimensional symptom parameters should be determined by statistic check, or according to the confidence interval shown by formulas (33), (34) and (35), or according to the possibility distribution function shown in Fig. 2

**3) Integration of judgment criterion for dimensional symptom parameters and non-dimensional symptom parameters**

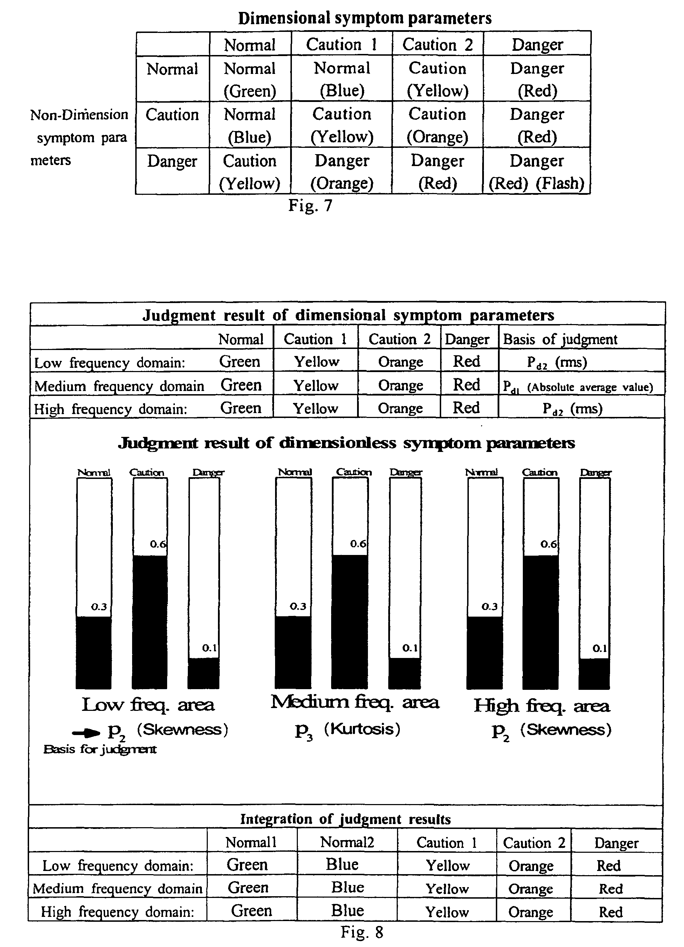

Fig. 7 shows the integration of judgment criterion for dimensional symptom parameters and non-dimensional symptom parameters. The following remarks are made with this figure.

(a) When condition monitoring is performed using a number of non-dimensional symptom parameters, the judgment result of the symptom parameter giving the judgment of "state change is big" will take priority. For instance, when $p_1 \sim p_3$ are used for equipment diagnosis, the following inspection results can be obtained in the low, medium and high frequency domains.
The judgment result with $p_1$: "normal", "caution" and "normal"
The judgment result with $p_2$: "caution", "danger" and "normal"
The judgment result with $p_3$: "normal", "normal" and "normal"
     In the medium frequency domain, as the judgment result with $p_2$ is "danger", so the final judgment result is "danger".

(b) When a number of dimensional symptom parameters are used for condition monitoring, the final judgment result will be determined in the same way as (a) above.

(c) When a number of symptom parameters described in (3) above are integrated into one, the judgment criterion based on the integrated one symptom parameter should be determined according to various integration methods.

For instance, when the symptom parameters are integrated using the main composition analysis method, the $\chi^2$ inspection method can be used for condition monitoring. ((12) Toshio TOYOTA: Research Report on Practical Application of Latest Equipment Diagnosis Technology, Legal Corporate Japan Plant Maintenance Association, (1999)).

(d) The final judgment result from integrating the judgment criterion for dimensional symptom parameters and non-dimensional symptom parameters can be directly displayed on the screen of the plant in characters. The state change can be indicated by color lamps (referred to as "state lamps" here) according to the state change shown in Fig. 7.

### 4) Indication of results

The indication example of judgment result using dimensional and non-dimensional symptom parameters and the judgment result by integrating judgment criterion (state lamp) are shown in Fig. 8. Furthermore, the judgment result for non-dimensional symptom parameters indicates the probability of the state or the degree of possibility.

### 4. Trend management for state change

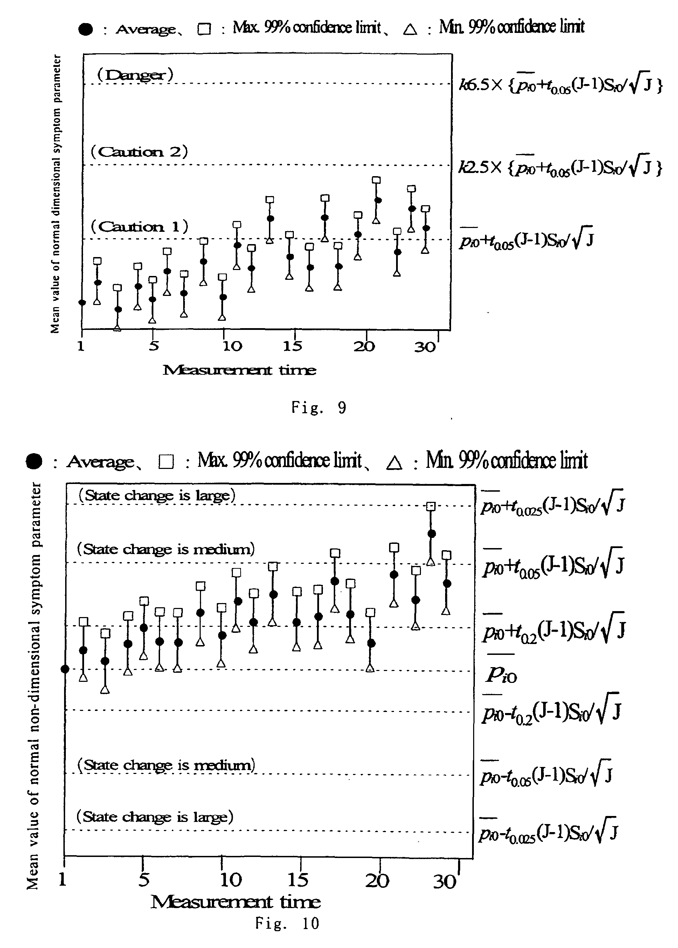

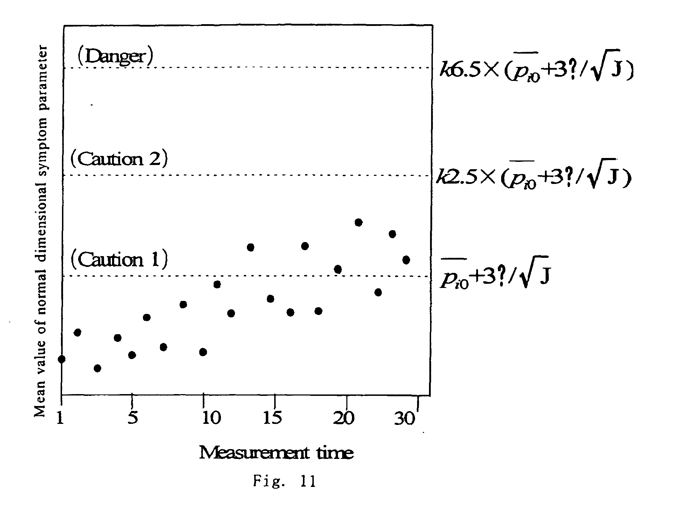

The example diagrams of trend management of state change using normal dimensional and non-dimensional symptom parameters are shown in Figs. 9 and 10. In addition, the example diagram of trend management of state change with dimensional symptom parameters is shown in Fig. 11. The k in Figs. 9 and 10 is the same as k in Fig. 4.

### 5. State prediction

After obtaining the symptom parameters $p_i$, it is relatively easier to predict the state of the measuring objects using the previous state prediction means ((13) Shincho ISHIKAWA and Hakamichi MUTO: Prediction Method, Metering and Control, March 1982. (14) Ogawa, M.: Time series analysis and stochastic prediction, Bull. Math. Stat., 8, 8-72, 1958).

### 6. Processing flow

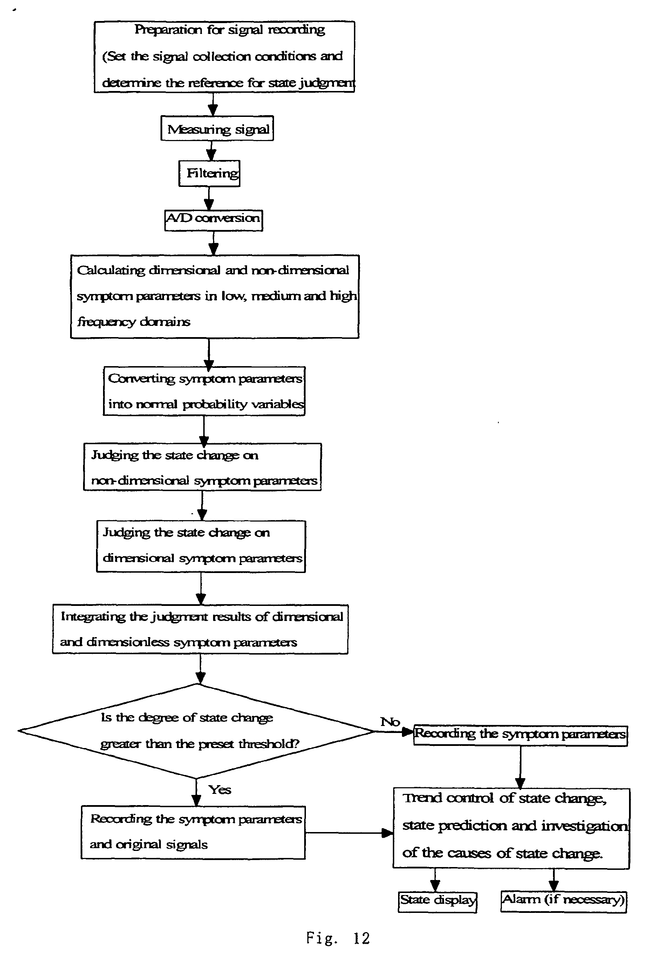

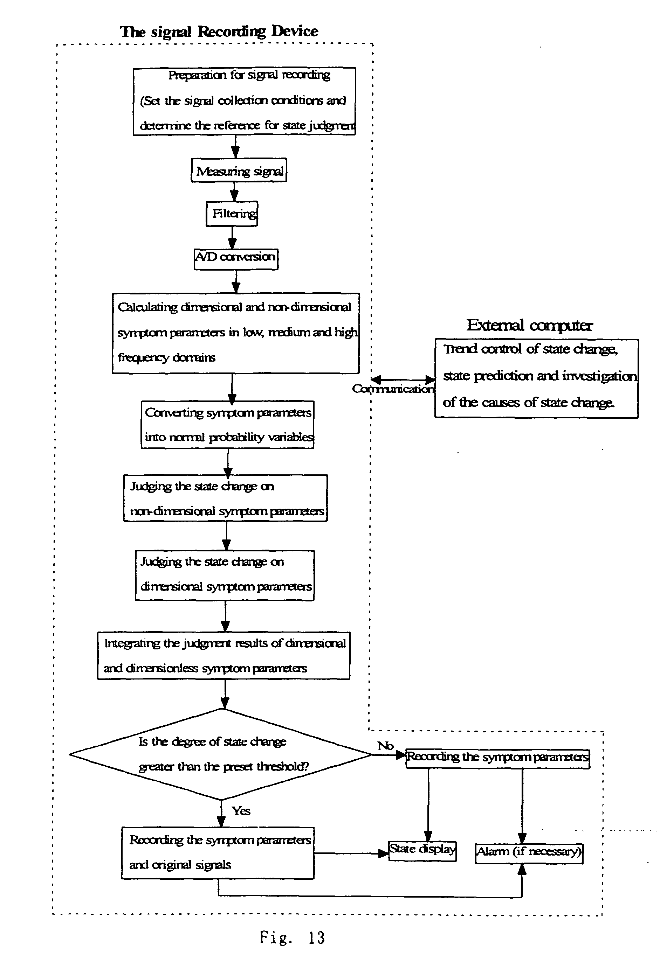

The processing flow for the signal recording system proposed in this invention is as shown in Fig. 12. Also, as shown in Fig. 13, a signal recording system can be formed with signal recording device separated from the external computer. In this way, the computation processing burden of the signal recording device can be lessened, and the signal recording device can be made compact and easy for setup on field. The external computer can perform data communication with the signal recording device to set measurement conditions, make judgment criterion, state trend management, precision diagnosis and cause analysis. In addition, when performing precision diagnosis and cause analysis, the condition monitoring method using genetic algorithms, neural network and main composition analysis methods can also be used.

### V. Examples of practical application

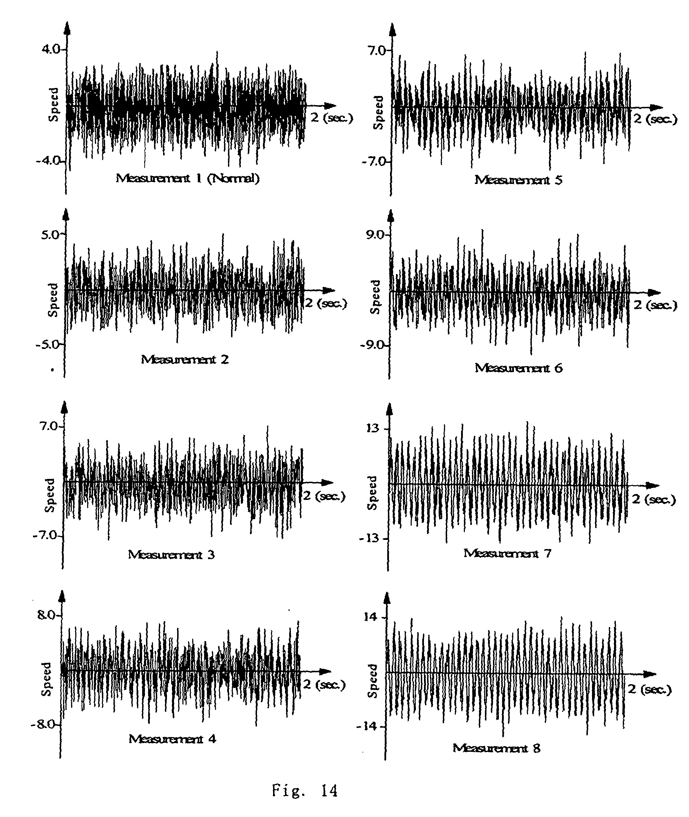

Fig. 14 shows the time serial signals measured by a speed sensor installed on the shaft of a rotating machine. This machine is changing from normal state to unbalance state. To identify the state, as an example, the non-dimensional symptom parameters ($p_1 \sim p_6$) shown in formulas (1) $\sim$ (6) and the dimensional symptom parameters ($p_{d1} \sim p_{d3}$) shown in formulas (15) $\sim$ (17) are used.

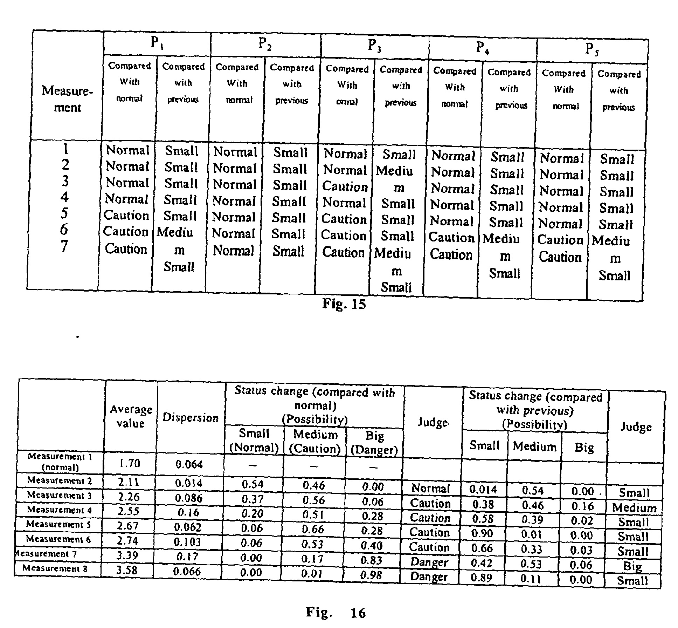

Fig. 15 shows the judgment result with non-dimensional symptom parameters ($p_1 \sim p_5$), and Fig. 16 shows the judgment result with dimensional symptom parameters ($p_6$). According to these results, as $p_6$ is more sensitive in judging the state as compared with other non-dimensional symptom parameters, therefore, as shown in Fig. 16, the judgment result of $p_6$ is used as judgment result using non-dimensional symptom parameters.

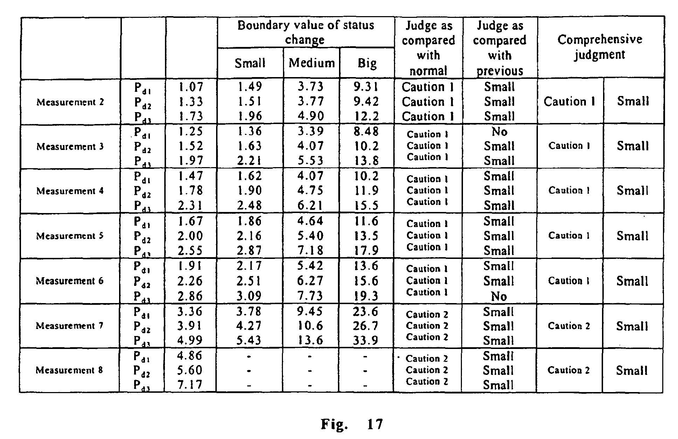

Fig. 17 shows the judgment result with dimensional symptom parameters.

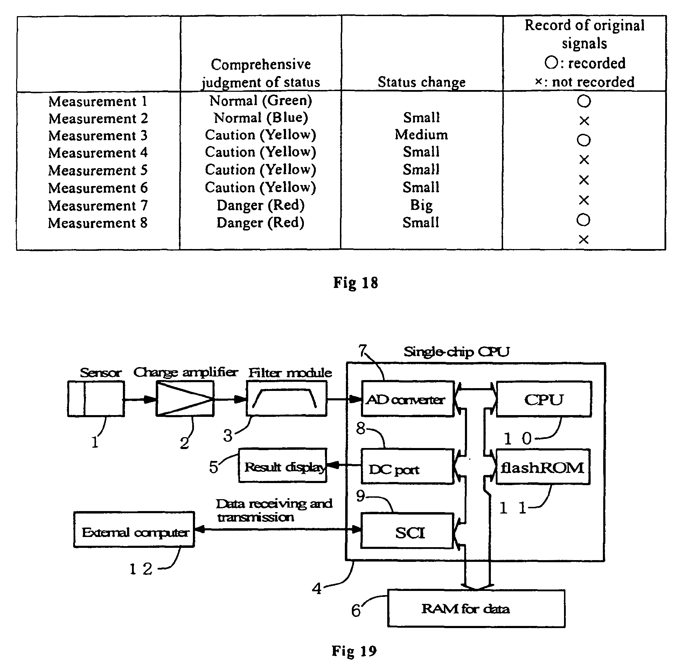

The final judgment result integrating the judgment results with dimensional and non-dimensional symptom parameters are as shown in Fig. 18.

In addition, although the degree of state change as against normal state is indicated with state lamps, the degree of state change as against last state will be used as the criterion to determine if original signals are to be recorded. For instance, the recording the original waveform of "measurement 1 (normal)", "measurement 3 (medium state change)" and "measurement 7 (big state change)" will be determined according to the integrated judgment of Fig. 18.

Furthermore, in this example, as the signals from measurement 3 to measurement 8 are in the same state (unbalanced), it is believed that the records of original signals based on the above judgment result are sufficient to explain the cause of abnormality (precision diagnosis). If other abnormal state takes place during the measurement, as in this example, the dimensional and non-dimensional symptom parameters used for condition monitoring will be reflected in its state change, and original signals of state change can be recorded at appropriate time.

An example of the circuit diagram of the signal recording device is as shown in Fig. 19. in the figure, 1: sensor, 2: charging amplifier, 3: filter module, 4: chip CPU, 5: result display, 6: RAM for data, 7: AD converter, 8: DC port, 9: SCI, 10: CPU, 11: flash ROM, 12: external computer.

This signal recording device can be designed to have a number of channels. In addition, the external computer can be used to set the recording conditions for signal recording device and the condition monitoring criterion, read the symptom parameters and original signals recorded, perform trend management of state change and cause analysis.

### VI. Effect of invention

This invention is for long-time condition monitoring of objects in machinery diagnosis, medical diagnosis and seismic monitoring. It only records the dimensional and non-dimensional symptom parameters reflecting their state when it is judged that there is no obvious abnormality or state change, and it simultaneously records the symptom parameters and original signals when it is judged that there is obvious abnormality or state change, and also performs trend control and cause analysis on the state change and functions to find out the cause of abnormality or state change. To record signals for long time using the signal recording system and device of this invention can reduce the waste of signal recording media and enable recording of symptom parameters reflecting state change and original signals at appropriate time. In performing condition monitoring, the recorded symptom parameters are converted into normal symptom parameters conforming to normal probability density distribution, the criterion of dimensional and non-dimensional symptom parameters and normal symptom parameters for condition monitoring is determined via probability theory, confidence interval and possibility theory, and condition monitoring is performed by integrating the judgment result with dimensional and non-dimensional symptom parameters.

In addition, as required, trend control of state change, state prediction and cause analysis of state change are performed, the state at the time of measurement is indicated, and alarms are sent in dangerous state.

### VII. Brief notes of figures

Fig. 1 is a graph showing an example of possibility distribution function.

Fig. 2 is a graph showing judging the state change using possibility function.

Fig. 3 is a graph showing the presentation example of possibility.

Fig. 4 is a graph showing the judgment criterion of dimensional symptom parameters in low frequency domain.

Fig. 5 is a graph showing the judgment criterion of dimensional symptom parameters in medium frequency domain.

Fig. 6 is a graph showing the judgment criterion of dimensional symptom parameters in high frequency domain.

Fig. 7 is a graph explaining the integration of judgment criterion of dimensional symptom parameters and non-dimensional symptom parameters.

Fig. 8 is a graph showing the presentation example of judgment result.

Fig. 9 is a graph showing trend management of state change using normal dimensional symptom parameters.

Fig. 10 is a graph showing trend management of state change using normal non-dimensional symptom parameters.

Fig. 11 is a graph showing trend management of state change using dimensional symptom parameters.

Fig. 12 is the flow chart showing the processing flow of a signal recording system.

Fig. 13 is the flow chart showing the processing flow of signal recording with external computer separated from signal recording device.

Fig. 14 is a graph showing an example of the measured original signal.

Fig. 15 is a graph showing the judgment result example with non-dimensional symptom parameters ($p_1 \sim p_5$).

Fig. 16 is a graph showing the judgment result example with non-dimensional symptom parameters $p_6$.

Fig. 17 is a graph showing the judgment result example with dimensional symptom parameters ($p_{d1}$, $p_{d2}$ and $p_{d3}$).

Fig. 18 is a graph showing an example of judgment result by integrating the dimensional and non-dimensional symptom parameters.

Fig. 19 is a circuit diagram showing an example of the circuit of a signal recording device, and the signs in the figure are as follows.

1: sensor, 2: charging amplifier, 3: filter module, 4: chip CPU, 5: result display, 6: RAM for data, 7: AD converter, 8: DC port, 9: SCI, 10: CPU, 11: flash ROM, 12: external computer.

**Claims**

1. The method to calculate the symptom parameters in various frequency domains with the signals of objects measured by sensors, and
The method to convert the calculated symptom parameters into normal symptom parameters conforming to normal probability density distribution, and
The method to perform state judgment, state trend control and state prediction using the normal symptom parameters obtained from the above-mentioned conversion, and
The method to determine the state judgment criterion for dimensional and non-dimensional symptom parameters by statistic and possibility theory for the purpose to determine the degree of state change, and
The method to determine the state judgment criterion for normal symptom parameters by and possibility theory, and
The method to judge the degree of state change by integrating the state judgment results of dimensional and non-dimensional symptom parameters, and
The method to determine whether only the symptom parameters of various frequency domains will be recorded, or the symptom parameters of various frequency domains and the original signals for the required time period will be recorded concurrently according to the result of state change, and
The signal recording system and device that indicate the degree of state change using probability, possibility degree and state lamps as display means.

EP 1 411 326 A1

Fig. 1

Fig. 2

Normal    Caution    Danger

0.6

0.3

0.1

(Blue)    (Yellow)    (Red)

Fig. 3

State change is large  (Danger)

(k6.5) — — — — — — — — — — — — — — — —

State change is medium  (Caution 2)

(k2.5) — — — — — — — — — — — — — — —

State change is small  (Caution 1)

(1) — — — — — — — — — — — — — — — —
Average+3 $\sigma$  of normal state

There is no state change  (Normal)

Speed (mm/s)

(Low frequency area 5Hz～1kHz)

Fig. 4

Acceleration (mm/s$^2$)

State change is large  (Danger)

(k6) ─ ─ ─ ─ ─ ─ ─ ─ ─ ─ ─ ─ ─ ─ ─ ─

State change is medium  (Caution 2)

(k3) ─ ─ ─ ─ ─ ─ ─ ─ ─ ─ ─ ─ ─ ─ ─ ─

State change is small  (Caution 1)

(1) ─ ─ ─ ─ ─ ─ ─ ─ ─ ─ ─ ─ ─ ─ ─ ─
Average+3 σ  of normal state

There is no state change  (Normal)

(Medium frequency area 5kHz～)

Fig. 5

Acceleration (mm/s$^2$)

State change is large  (Danger)

(k40) ─ ─ ─ ─ ─ ─ ─ ─ ─ ─ ─ ─ ─ ─ ─ ─

State change is medium  (Caution 2)

(k6.25) ─ ─ ─ ─ ─ ─ ─ ─ ─ ─ ─ ─ ─ ─ ─ ─

State change is small  (Caution 1)

(1) ─ ─ ─ ─ ─ ─ ─ ─ ─ ─ ─ ─ ─ ─ ─ ─
Average+3 σ  of normal state

There is no state change  (Normal)

(High frequency area 5kHz～)

Fig. 6

**Dimensional symptom parameters**

| | | Normal | Caution 1 | Caution 2 | Danger |
|---|---|---|---|---|---|
| | | Normal | Caution 1 | Caution 2 | Danger |
| Non-Dimension symptom para meters | Normal | Normal (Green) | Normal (Blue) | Caution (Yellow) | Danger (Red) |
| | Caution | Normal (Blue) | Caution (Yellow) | Caution (Orange) | Danger (Red) |
| | Danger | Caution (Yellow) | Danger (Orange) | Danger (Red) | Danger (Red) (Flash) |

Fig. 7

| Judgment result of dimensional symptom parameters | | | | | |
|---|---|---|---|---|---|
| | Normal | Caution 1 | Caution 2 | Danger | Basis of judgment |
| Low frequency domain: | Green | Yellow | Orange | Red | $P_{d2}$ (rms) |
| Medium frequency domain | Green | Yellow | Orange | Red | $P_{d1}$ (Absolute average value) |
| High frequency domain: | Green | Yellow | Orange | Red | $P_{d2}$ (rms) |

**Judgment result of dimensionless symptom parameters**

| Normal | Caution | Danger | | Normal | Caution | Danger | | Normal | Caution | Danger |

Low freq. area  |  Medium freq. area  |  High freq. area

→ $P_2$ (Skewness)    $P_3$ (Kurtosis)    $P_2$ (Skewness)

Basis for judgment

| Integration of judgment results | | | | | |
|---|---|---|---|---|---|
| | Normal1 | Normal2 | Caution 1 | Caution 2 | Danger |
| Low frequency domain: | Green | Blue | Yellow | Orange | Red |
| Medium frequency domain | Green | Blue | Yellow | Orange | Red |
| High frequency domain: | Green | Blue | Yellow | Orange | Red |

Fig. 8

● : Average、 □ : Max. 99% confidence limit、 △ : Min. 99% confidence limit

Fig. 9

● : Average、 □ : Max. 99% confidence limit、 △ : Min. 99% confidence limit

Fig. 10

Fig. 11

Preparation for signal recording
(Set the signal collection conditions and
determine the reference for state judgment

↓

Measuring signal

↓

Filtering

↓

A/D conversion

↓

Calculating dimensional and non-dimensional
symptom parameters in low, medium and high
frequency domains

↓

Converting symptom parameters
into normal probability variables

↓

Judging the state change on
non-dimensional symptom parameters

↓

Judging the state change on
dimensional symptom parameters

↓

Integrating the judgment results of dimensional
and dimensionless symptom parameters

↓

Is the degree of state change
greater than the preset threshold?

No → Recording the symptom parameters

↓

Yes

Recording the symptom parameters
and original signals

↓

Trend control of state change,
state prediction and investigation
of the causes of state change.

↓

State display        Alarm (if necessary)

Fig. 12

EP 1 411 326 A1

**The signal Recording Device**

Fig. 13

EP 1 411 326 A1

Fig. 14

EP 1 411 326 A1

| Measure-ment | P₁ | | P₂ | | P₃ | | P₄ | | P₅ | |
|---|---|---|---|---|---|---|---|---|---|---|
| | Compared With normal | Compared with previous | Compared With normal | Compared with previous | Compared With onrmal | Compared with previous | Compared With normal | Compared with previous | Compared With normal | Compared with previous |
| 1 | Normal | Small | Normal | Small | Normal | Small | Normal | Small | Normal | Small |
| 2 | Normal | Small | Normal | Small | Normal | Mediu m | Normal | Small | Normal | Small |
| 3 | Normal | Small | Normal | Small | Caution | | Normal | Small | Normal | Small |
| 4 | Normal | Small | Normal | Small | Normal | Small | Normal | Small | Normal | Small |
| 5 | Caution | Small | Normal | Small | Caution | Small | Normal | Small | Normal | Small |
| 6 | Caution | Mediu m | Normal | Small | Caution | Small | Caution | Mediu m | Caution | Mediu m |
| 7 | Caution | Small | Normal | Small | Caution | Mediu m Small | Caution | Small | Caution | Small |

Fig. 15

.

| | Average value | Dispersion | Status change (compared with normal) (Possibility) | | | Judge | Status change (compared with previous) (Possibility) | | | Judge |
|---|---|---|---|---|---|---|---|---|---|---|
| | | | Small (Normal) | Medium (Caution) | Big (Danger) | | Small | Medium | Big | |
| Measurement 1 (normal) | 1.70 | 0.064 | — | — | — | | | | | |
| Measurement 2 | 2.11 | 0.014 | 0.54 | 0.46 | 0.00 | Normal | 0.014 | 0.54 | 0.00 | Small |
| Measurement 3 | 2.26 | 0.086 | 0.37 | 0.56 | 0.06 | Caution | 0.38 | 0.46 | 0.16 | Medium |
| Measurement 4 | 2.55 | 0.16 | 0.20 | 0.51 | 0.28 | Caution | 0.58 | 0.39 | 0.02 | Small |
| Measurement 5 | 2.67 | 0.062 | 0.06 | 0.66 | 0.28 | Caution | 0.90 | 0.01 | 0.00 | Small |
| Measurement 6 | 2.74 | 0.103 | 0.06 | 0.53 | 0.40 | Caution | 0.66 | 0.33 | 0.03 | Small |
| Measurement 7 | 3.39 | 0.17 | 0.00 | 0.17 | 0.83 | Danger | 0.42 | 0.53 | 0.06 | Big |
| Measurement 8 | 3.58 | 0.066 | 0.00 | 0.01 | 0.98 | Danger | 0.89 | 0.11 | 0.00 | Small |

Fig. 16

24

| | | | Boundary value of status change | | | Judge as compared with normal | Judge as compared with previous | Comprehensive judgment | |
|---|---|---|---|---|---|---|---|---|---|
| | | | Small | Medium | Big | | | | |
| Measurement 2 | $P_{d1}$ | 1.07 | 1.49 | 3.73 | 9.31 | Caution 1 | Small | Caution 1 | Small |
| | $P_{d2}$ | 1.33 | 1.51 | 3.77 | 9.42 | Caution 1 | Small | | |
| | $P_{d3}$ | 1.73 | 1.96 | 4.90 | 12.2 | Caution 1 | Small | | |
| Measurement 3 | $P_{d1}$ | 1.25 | 1.36 | 3.39 | 8.48 | Caution 1 | No | Caution 1 | Small |
| | $P_{d2}$ | 1.52 | 1.63 | 4.07 | 10.2 | Caution 1 | Small | | |
| | $P_{d3}$ | 1.97 | 2.21 | 5.53 | 13.8 | Caution 1 | Small | | |
| Measurement 4 | $P_{d1}$ | 1.47 | 1.62 | 4.07 | 10.2 | Caution 1 | Small | Caution 1 | Small |
| | $P_{d2}$ | 1.78 | 1.90 | 4.75 | 11.9 | Caution 1 | Small | | |
| | $P_{d3}$ | 2.31 | 2.48 | 6.21 | 15.5 | Caution 1 | Small | | |
| Measurement 5 | $P_{d1}$ | 1.67 | 1.86 | 4.64 | 11.6 | Caution 1 | Small | Caution 1 | Small |
| | $P_{d2}$ | 2.00 | 2.16 | 5.40 | 13.5 | Caution 1 | Small | | |
| | $P_{d3}$ | 2.55 | 2.87 | 7.18 | 17.9 | Caution 1 | Small | | |
| Measurement 6 | $P_{d1}$ | 1.91 | 2.17 | 5.42 | 13.6 | Caution 1 | Small | Caution 1 | Small |
| | $P_{d2}$ | 2.26 | 2.51 | 6.27 | 15.6 | Caution 1 | Small | | |
| | $P_{d3}$ | 2.86 | 3.09 | 7.73 | 19.3 | Caution 1 | No | | |
| Measurement 7 | $P_{d1}$ | 3.36 | 3.78 | 9.45 | 23.6 | Caution 2 | Small | Caution 2 | Small |
| | $P_{d2}$ | 3.91 | 4.27 | 10.6 | 26.7 | Caution 2 | Small | | |
| | $P_{d3}$ | 4.99 | 5.43 | 13.6 | 33.9 | Caution 2 | Small | | |
| Measurement 8 | $P_{d1}$ | 4.86 | - | - | - | Caution 2 | Small | Caution 2 | Small |
| | $P_{d2}$ | 5.60 | - | - | - | Caution 2 | Small | | |
| | $P_{d3}$ | 7.17 | - | - | - | Caution 2 | Small | | |

**Fig. 17**

| | Comprehensive judgment of status | Status change | Record of original signals ○: recorded ×: not recorded |
|---|---|---|---|
| Measurement 1 | Normal (Green) | | ○ |
| Measurement 2 | Normal (Blue) | Small | × |
| Measurement 3 | Caution (Yellow) | Medium | ○ |
| Measurement 4 | Caution (Yellow) | Small | × |
| Measurement 5 | Caution (Yellow) | Small | × |
| Measurement 6 | Caution (Yellow) | Small | × |
| Measurement 7 | Danger (Red) | Big | ○ |
| Measurement 8 | Danger (Red) | Small | × |

**Fig 18**

**Fig 19**

## INTERNATIONAL SEARCH REPORT

International application No.

PCT/JP02/05760

**A. CLASSIFICATION OF SUBJECT MATTER**
Int.Cl⁷ G01D9/00, G01D21/00, G01D1/18, G05B23/02

According to International Patent Classification (IPC) or to both national classification and IPC

**B. FIELDS SEARCHED**

Minimum documentation searched (classification system followed by classification symbols)
Int.Cl⁷ G01D9/00, G01D21/00, G01D1/18, G05B23/02, G06F9/44, G06N7/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 62-067411 A (Toshiba Corp.), 27 March, 1987 (27.03.87), All pages; all drawings (Family: none) | 1 |
| A | JP 7-078022 A (Toshiba Corp.), 20 March, 1995 (20.03.95), All pages; all drawings (Family: none) | 1 |
| A | JP 2000-259222 A (Hitachi, Ltd.), 22 September, 2000 (22.09.00), All pages; all drawings (Family: none | 1 |

| ☒ | Further documents are listed in the continuation of Box C. | ☐ | See patent family annex. |
|---|---|---|---|

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 July, 2002 (31.07.02) | 13 August, 2002 (13.08.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

| | International application No. |
|---|---|
| | PCT/JP02/05760 |

**C (Continuation). DOCUMENTS CONSIDERED TO BE RELEVANT**

| Category* | Citation of document, with indication, where appropriate, of the relevant passages | Relevant to claim No. |
|---|---|---|
| A | JP 9-054613 A (Toshiba Corp.),<br>25 February, 1997 (25.02.97),<br>All pages; all drawings<br>(Family: none) | 1 |
| A | JP 7-280603 A (Shikoku Electric Power Co., Inc.),<br>27 October, 1995 (27.10.95),<br>All pages; all drawings<br>(Family: none) | 1 |
| A | JP 8-320726 A (Hitachi, Ltd.),<br>03 December, 1996 (03.12.96),<br>All pages; all drawings<br>(Family: none) | 1 |
| A | US 5982934 A (Texas Instruments Inc.),<br>09 November, 1999 (09.11.99),<br>All pages; all drawings<br>& JP 7-035583 A<br>All pages; all drawings | 1 |

Form PCT/ISA/210 (continuation of second sheet) (July 1998)